Europäisches Patentamt

European Patent Office

Office européen des brevets

(19)

(11) Publication number: **0 359 733**
**A2**

# EUROPEAN PATENT APPLICATION

(12)

(21) Application number: **89850301.6**

(22) Date of filing: **13.09.89**

(51) Int. Cl.⁵: **B 60 S 1/04**

(30) Priority: **16.09.88 SE 8803290**

(43) Date of publication of application:
**21.03.90 Bulletin 90/12**

(84) Designated Contracting States: **DE FR GB SE**

(71) Applicant: **AKTIEBOLAGET ELECTROLUX**
**Luxbacken 1**
**S-105 45 Stockholm (SE)**

(72) Inventor: **Hesling, Johannes Ringer**
**Almvik**
**S-593 00 Västervik (SE)**

(74) Representative: **Hagelbäck, Evert Isidor et al**
**c/o AB Electrolux Corporate Patents & Trademarks**
**S-105 45 Stockholm (SE)**

(54) Pane wiper assembly, preferably for vehicles.

(57) A pane wiper assembly, preferably for vehicles, comprises a frame (11) and a driving device (21) supported by the frame and including an electric motor (22) assembled with a worm gear unit (23). Via a motion transmission mechanism (25,26,27;28,29) at least one rotatably journalled wiper shaft (14,15) is connected to the driving device to drive, via a wiper arm, a wiper blade in a reciprocating wiping action across the pane. The motor (22) and the gear unit (23) are enclosed in a motor housing (31) and so disposed within said housing that a plane of symmetry (43) for the driving device (21) is formed which mainly coincides with the axial line of symmetry of the motor shaft. In addition, the driving device is disposed in a recess (20) in the frame such that its plane of symmetry (43) essentially coincides with the plane of symmetry of the frame in the area of the recess.

Fig. 1

EP 0 359 733 A2

Bundesdruckerei Berlin

# Description

## Pane wiper assembly, preferably for vehicles

The present invention refers to a pane wiper assemby, preferably for vehicles, according to the preamble of the appending claim 1.

Traditionally, windshield wipers for cars have been constructed such that a frame supports two rotatably journalled wiper shafts each of which operating via a wiper arm to move a wiper blade in a reciprocating wiping action across the windshield. The frame is secured to the cowl of the car such that the wiper shafts protrude through holes in said cowl in an area just below the windshield. The wiper arms are secured to the free ends of the wiper shafts.

The wiper shafts are driven by an electric motor which is assembled with a worm gear unit for the purpose of accomplishing a suitable gear between the motor and the wiper shafts. From a principle point of view the motor and the gear housing have been made as separate parts, however, by screws or the like joined together to form a single unit. The unit is provided with mounting legs secured by screws or the like to the frame which alone constitutes the supporting part of the assembly. Accordingly, the frame has to be given a strong and rigid design for supporting the motor and gear and the transmission mechanisms between the gear and the wiper shafts but also for taking the forces arising when the assembly is operating.

As via the mounting legs the motor and gear are situated at a distance from the frame the complete assembly will occupy space not only longitudinally in the frame but also in lateral directions.

The object of the invention is to reduce the mounting space required for a wiper assembly and, hence, to provide an assembly of compact external measurements where motor and gear is no longer a unit to be mounted on the frame but constitutes an integrated supporting part of said frame. The object will be achieved in a wiper assembly having the features indicated in the claims.

The invention will now be described more in detail in connection with an embodiment with reference to the enclosed drawings.

Fig. 1 shows in perspective a pane wiper assembly according to the invention.

Fig. 2 is a top view of the assembly of Fig. 1.

Fig. 3 is a plane view of the assembly of Fig. 1 when turned so that the mounting plane for an electric motor being part of the assembly is perpendicular to the plane of projection.

Fig. 4 is a plane view of the motor of the assembly.

Fig. 5 is a side view of the motor of Fig. 4.

Fig. 6 is a section along the line VI - VI in Fig. 4.

Fig. 7 is a view according to Fig. 4 in which the upper one of two housing halves forming the motor housing has been removed.

Fig. 8, finally, shows the inside of the upper housing half.

In the embodiment shown a pane wiper assembly 10 comprises a frame 11, suitably made from aluminium, zinc or the like in a casting process. The frame is elongated and moreover its shape is determined by the vehicle in which it is to be mounted. At each respective end of the elongated frame a bearing housing 12, 13, respectively, is provided for a wiper shaft 14 and 15, respectively, said shafts being rotatably journalled in the respective housing. Via a wiper arm, not shown, each shaft is arranged to move a wiper blade in a reciprocating action across a windshield, not shown, of a vehicle. The frame is provided with mounting brackets, having holes, said brackets being used to secure the frame to the vehicle by screw joints.

The frame 11 has a central portion 19 having an opening 20 in which a driving device is recessed, said driving device operating the wiper shafts 14, 15. The driving device, which is constituted by an electric motor 22 assembled with a worm gear 23, will be described more in detail below. From the output shaft 24 of the worm gear motion is transmitted to the wiper shafts 14, 15 by means of two motion transmission systems, one of which comprising an arm 25 which via a joint 26 is secured to a crank arm 27 connected with the wiper shaft 15. The other motion transmission system comprises an arm 28, the free end of which via a wire, not shown, being connected to a pulley 29 disposed on the wiper shaft 14 and surrounded by the wire, wherein displacement of the arm 28 via the wire results in the turning of the pulley 29 and hence of the wiper shaft 14. By joints the arms 25, 28 are connected to a crank arm 30 which, in a known way, are secured to the output shaft 24 of the worm gear. The motion transmission systems shown only constitute examples of possible embodiments and, naturally, other systems are included within the scope of the invention.

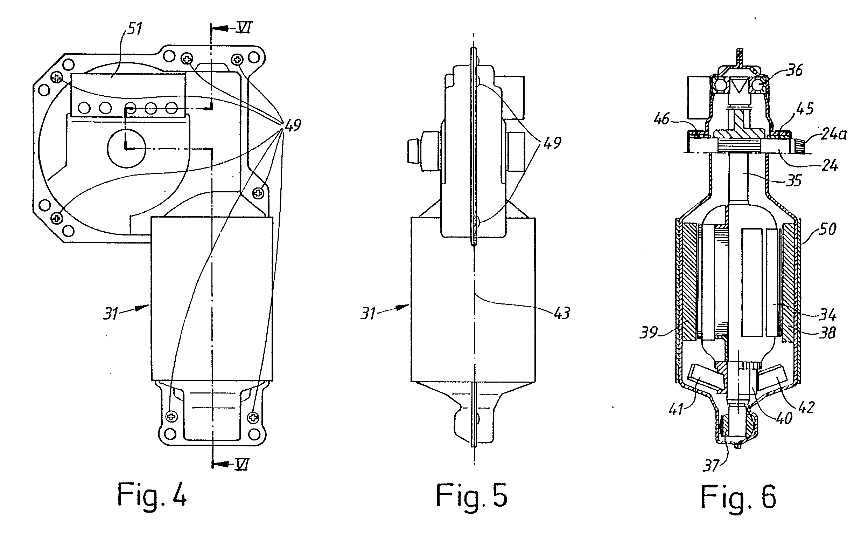

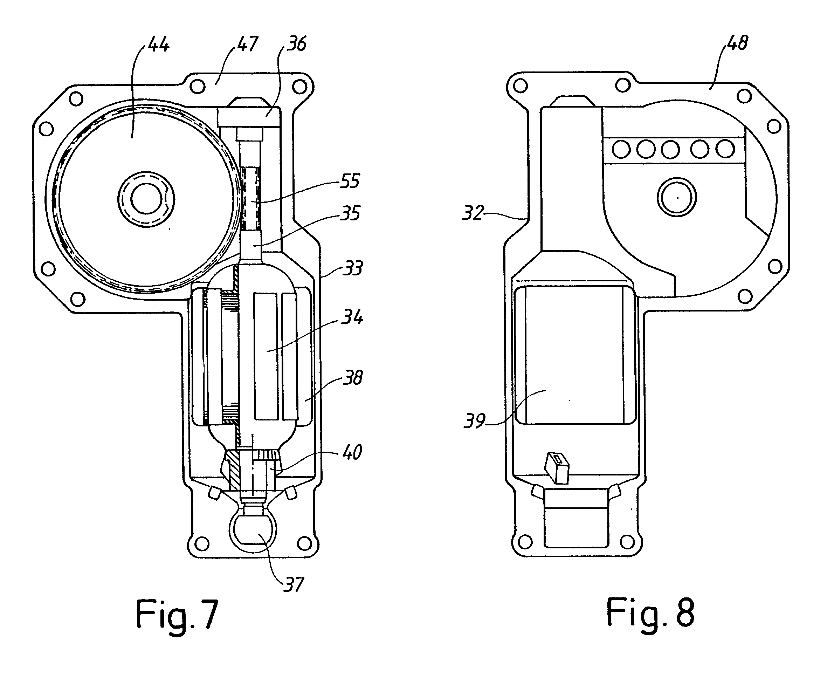

An essential feature of the invention is the shape of the driving device. In order to provide a compact wiper assembly it is important that the driving device be given a shape that allows it to be positioned as symmetrical as possible in the opening 20. For this purpose the driving device has been given a shape as shown in Figs. 4 - 8. The device has been enclosed in a housing 31 comprising two symmetrical housing halves, an upper one 32 and a lower one 33. As shown in Figs. 6 - 8 the motor 22 comprises a rotor 34 disposed on the shaft 35 the ends of which being journalled in a ball bearing 36 and a plain bearing 37, respectively, the bearings being disposed and fixed in suitable recesses in the housing halves 32, 33.

The stator of the motor is constituted by permanent magnets 38, 39 which have been mounted in recesses in each respective one of the housing halves. In the usual way, on the rotor shaft there is provided a commutator 40 against which bear carbon brushes 41, 42. Moreover, the rotor shaft has a portion 55 having the shape of a worm which engages with teeth provided on the periphery of a worm wheel 44 which is journalled in a gear housing being an integrated part of the housing 31. The worm wheel has been disposed so as to be positioned in the plane of symmetry 43 formed by housing halves 32, 33 as put together. The output shaft 24 of the worm gear, see Fig. 6, is being journalled in plain bearings 45, 46 disposed in openings in the respective one of the housing halves 32, 33. The end 24a of the output shaft has been knurled for securing to it of the crank arm 30.

The two housing halves 32, 33 have been made by pressing of sheet metal. The housing halves have been provided with flanges which in the assembled driving device engages with each other forming the plane of symmetry 43. The flanges are held together by screw joints 49 and, in addition, the part of the housing enclosing the motor is surrounded by a cylindrical metal casing 50 reinforcing the construction and improving the magnetic properties of the stator, as well. On the gear housing a terminal box 51 is provided by which the motor is electrically connected.

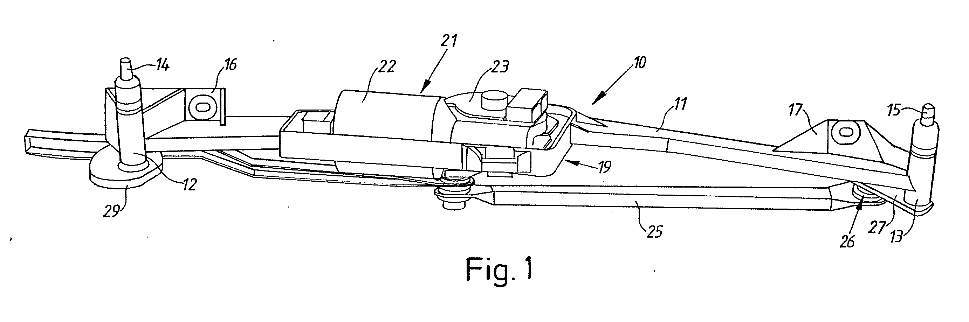

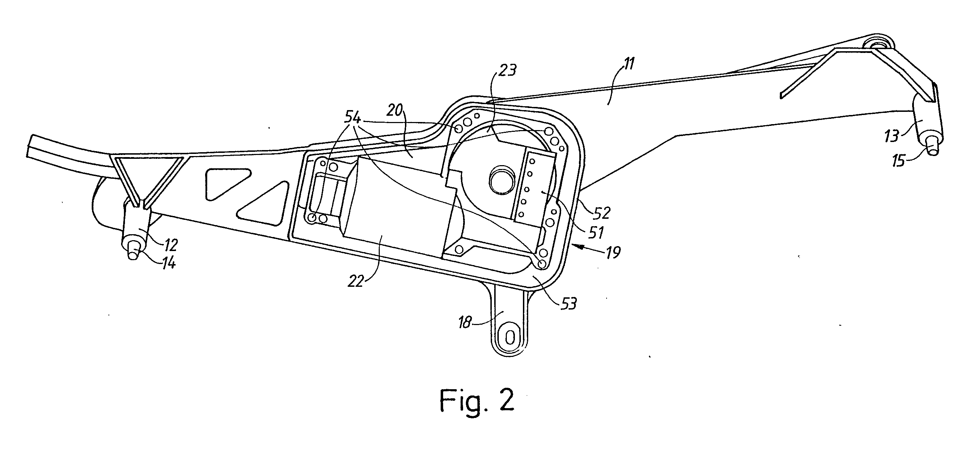

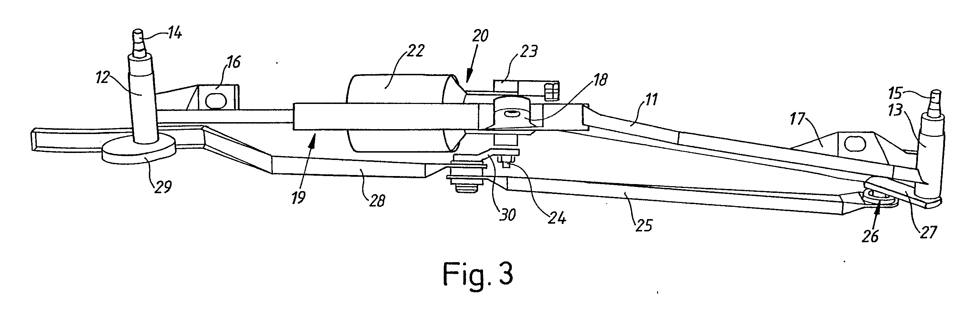

As seen in Figs. 1 - 3 the driving device 21 is recessed in the frame in such a way that it will be symmetrically positioned. For this purpose the central portion 19 comprises a framing edge 52 having a shape corresponding to the shape of the driving device in the plane of symmetry 43. A mounting flange 53 extends inwardly from the edge 52 and the flanges 47, 48 of the driving device are secured to said flange by screw joints 54 such that the partition plane of the housing 31 mainly coincides with the plane of symmetry of the frame in the area of the opening 20 in the frame.

Hence, by the special design of the driving device and by the symmetrical recessing of it in the frame a compact pane wiper assembly has been provided which has limited external dimensions in the lateral direction of the frame. In addition, by recessing the driving device in the frame instead of mounting it as a separate component on said frame the advantage has been achieved that part of the supporting function of the frame can be taken over by the driving device so that the central portion of the frame can be made weaker than would otherwise have been possible.

**Claims**

1. Pane wiper assembly, preferably for vehicles, comprising an elongated frame (11) in the shape of a metal profile and a driving device (21) supported by the frame and including an electric motor (22) which is assembled with a worm gear unit (23), at least one rotatably journalled wiper shaft (14,15) operating via a wiper arm to move a wiper blade in a reciprocating wiping action across the windshield, and a transmission mechanism interconnecting the gear unit and the wiper shaft, **characterized** in that the motor (22) and the gear unit (23) are enclosed in a motor housing (31) and so disposed within said housing that a plane of symmetry (43) for the driving device (21) is formed which mainly coincides with the axial line of symmetry of the motor shaft, said driving device (21) being so disposed in a recess (20) in the frame that its plane of symmetry (43) in the area of the recess essentially coincides with the plane of symmetry of the frame, wherein said driving device (21) is secured to the frame such as to be a supporting integral part of said frame.

2. Assembly according to claim 1, **characterized** in that in its plane of symmetry the driving device (21) is provided with a flange (47,48) which by screws or the like can be secured to a corresponding flange (53) provided in the recess (20).

3. Assembly according to claim 2, **characterized** in that the motor housing (31) comprises two symmetrical housing halves (32,33) which have flanges (47,48) bearing on each other and being secured by screw joints (49) or the like, the plane of contact of the flanges being the plane of symmetry (43) of the driving device.

4. Assembly according to claim 3, **characterized** in that the gear unit (23) comprises a worm wheel (44) which is rotatably journalled about an axis perpendicular to the rotor shaft (35) in bearings (45,46) disposed in openings in the respective one of the housing halves (32,33), wherein the plane of symmetry of the worm wheel (44) in a direction perpendicular to its axis of rotation coincides with the line of symmetry of the rotor shaft.

Fig. 1

Fig. 2

Fig. 3

EP 0 359 733 A2

Fig. 4

Fig. 5

Fig. 6

Fig. 7

Fig. 8

EP 0 359 733 A2